# EUROPÄISCHE PATENTANMELDUNG

(11) **EP 1 935 468 A1**
(43) Veröffentlichungstag der Anmeldung: **25.06.2008**
(21) Anmeldenummer: 07123513.9
(22) Anmeldetag: 18.12.2007
(51) Int. Cl.: B01D 29/15, B01D 29/92, B01D 29/96, B01D 36/00, F02M 37/22

(54) **Kraftstofffilter**

(30) Priorität: 20.12.2006 DE 102006060127
(71) Anmelder: Mahle International GmbH, 70376 Stuttgart (DE)
(72) Erfinder: Jensen, Hans, West Bloomfield, MI 48322 (US); Lika, Torsten, 70197, Stuttgart (DE); Stachl, Jürgen, Walled Lake, MI 48390 (US)
(74) Vertreter: Bongen, Renaud & Partner

(57) **Zusammenfassung**

Ein Kraftstofffilter für einen Verbrennungsmotor eines Kraftfahrzeuges mit
- einem teilbaren, eine Kraftstoffzu- und eine Abflussöffnung aufweisenden Gehäuse,
- einem austauschbar innerhalb des Gehäuses gelagerten, radial von außen nach innen durchströmbaren Ringfilterelement (3) mit endseitigen Endscheiben, nämlich einer ersten (13) und zweiten Endscheibe,
- einer im Filterbetrieb stehenden Ausrichtung der Längsachse des Ringfilterelementes (3),
- einem, im radialen Innenraum des Ringfilterelementes (3) von unten aus der Kraftstoff-Abflussöffnung nach oben führenden, gereinigten Kraftstoff abführenden Abflusskanal (5) in einem Rohr (4),
- einem zentral angeordneten, nach unten außen führenden und oben verschlossenen Entlüftungskanal (6) mit einer Drosselöffnung (7) in dem oberen Verschluss, wobei diese Drosselöffnung (7) in den Rein- oder Rohraum des Filters mündet,

soll derart ausgebildet sein, dass der Verbrennungsmotor bei fehlendem Ringfiltereinsatz (3) nicht betreibbar ist.

Zu diesem Zweck zeichnet sich ein solches Kraftstofffilter durch folgende Merkmale aus
- der, gereinigten Kraftstoff abführende, Abflusskanal (5) kommuniziert ausschließlich über ein Ventil (8) mit dem stromauf dieses Ventiles (8) liegenden Reinraum,
- das Ventil (8) ist bei vorhandenem Ringfilterelement (3) geöffnet und geschlossen bei fehlendem Ringfilterelement (3),
- der Ventilzustand in Offen- oder Geschlossenposition ist ausschließlich durch das Vorhanden- oder Nichtvorhandensein des Ringfilterelementes (3) als Ventilbetätigungselement bestimmt.

## Beschreibung

Die Erfindung betrifft ein Kraftstofffilter nach dem Oberbegriff des Patentanspruchs 1.

Ein solches Filter ist beispielsweise bekannt aus DE 195 19 352 C2.

Aus DE 103 29 199 A1 ist ein Ölfilter mit einem jeweils einem austauschbaren Haupt- und Nebenstromfiltereinsatz bekannt. Reinseitig innerhalb des Nebenstromfiltereinsatzes ist ein Ventil vorgesehen, das bei einem vorhandenen Nebenstromfilter einen Nebenstrom zu einem Hauptstrom ermöglicht und diesen Nebenstrom bei fehlendem Nebenstromfiltereinsatz automatisch verschließt. Durch eine solche Ventilanordnung und Funktion wird bei dem vorgenannten Hauptstrom/Nebenstromölfilter auch bei fehlendem Nebenstromfilter eine ausreichende Betriebsfunktion der Filtereinrichtung sichergestellt. Ein geschlossenes Ventil ist bei einem fehlenden Filtereinsatz aus folgenden Gründen erforderlich, wenn insbesondere das in dem Nebenstromfilter gefilterte Öl in einen drucklosen Raum, der der Kurbelraum eines Verbrennungsmotors sein kann, abfließen kann. In diesem Fall besitzt der Nebenstromfiltereinsatz einen äußerst hohen Durchflusswiderstand, damit das Öl, das aus einer gemeinsamen Zuleitung dem Haupt-und Nebenstromfiltereinsatz des Filters zugeführt wird, keinen unzulässig hohen Druckabfall erfährt. Einen besonders hohen Durchflusswiderstand hat beispielsweise eine als Nebenstromfilter eingesetzte Zentrifuge. Das bei jenem Ölfilter eingesetzte Ventil dient ausschließlich dazu, einen Motorbetrieb auch für den Fall sicherzustellen, in dem der betreffende Filtereinsatz versehentlich nicht vorhanden ist.

Die Erfindung beschäftigt sich bei einem gattungsgemäßen Kraftstofffilter dagegen mit dem Problem, dass ein Betrieb des Verbrennungsmotors bei fehlendem Kraftstofffilter in der Kraftstoffzufuhrleitung nicht erfolgen soll.

Gelöst wird dieses Problem durch die Ausbildung eines gattungsgemäßen Kraftstofffilters nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, in dem reinseitigen Abflusskanal des Filters ein Ventil vorzusehen, das bei einem fehlenden Filtereinsatz automatisch schließt und bei vorhandenem Filtereinsatz automatisch geöffnet ist. Diese automatische Ventilbetätigung wird durch das Filterelement als Betätigungselement bewirkt, das heißt ein eingesetzter Filtereinsatz öffnet das Ventil, während diese Öffnungsposition bei einem Entfernen des Filtereinsatzes aufgehoben wird.

Bei einer zweckmäßigen Ausgestaltung der Erfindung ist an dem Ventil eine Feder vorgesehen, die für eine Verschlussstellung des Ventiles sorgt und gegen deren Kraft das Ventil beim Einsetzen des Filtereinsatzes geöffnet wird.

Vorteilhafte, nachstehend noch näher erläuterte Ausführungsbeispiele sind in der Zeichnung dargestellt.

In dieser zeigen jeweils in einem Längsschnitt den oberen Teil eines Kraftstofffilters eines Verbrennungsmotors, und zwar
Fig. 1 eine erste Ausführungsform,
Fig. 2 eine zweite Ausführungsform.

Fig. 1
In einem, aus einem unteren Gehäuseteil 1, das bei einer in einem Filterbetrieb stehenden Anordnung oben mit einem Deckel 2 verschlossen ist, ist austauschbar gelagert ein Ringfilterelement 3. Dieses Ringfilterelement 3 wird von radial außen nach radial innen durchströmt, das heißt radial außen liegt die Rohseite und radial innen der Reinraum des Filters. Die vorstehend beschriebene Durchströmung des Ringfilterelementes 3 ist durch Strömungspfeile angedeutet.

Die Kraftstoffzu- und -abführleitungen befinden sich in dem unteren, nicht gezeichneten Teil des Gehäuseunterteiles 1.

Der gereinigte Kraftstoff wird reinseitig des Ringfilterelementes 3 durch ein sich von unten in den Reinraum erstreckendes Rohr 4, das mit dem Kraftstoffauslass kommuniziert, abgeführt. Dieses Rohr 4 ist filtergehäuseseitig fixiert, so dass es bei einem Wechsel des Ringfilterelementes 3 innerhalb des Gehäuseunterteiles verbleibt. Das Rohr 4 besitzt zwei voneinander getrennte Strömungskanäle, nämlich einen Abflusskanal 5 für gereinigten Kraftstoff sowie einen Entlüftungskanal 6. Der Entlüftungskanal 6 ist an dem oberen Ende des Rohres 4 über eine Drosselbohrung 7 mit der Filterrohseite verbunden. Das andere Ende dieses Entlüftungskanales 6 führt zurück in einen Kraftstoffsammelraum, das heißt insbesondere in den Kraftstofftank. Solche Entlüftungskanäle und deren Funktion sind bei Kraftstofffiltern bekannt.

Eine Durchströmung des Abflusskanales 5 ist durch ein Ventil 8 gesteuert. Dieses Ventil 8 besteht im wesentlichen aus zwei konzentrischen Rohrabschnitten, von denen einer von dem feststehenden Rohr 4 gebildet ist, während der andere, diesen Abschnitt konzentrisch umgreifende Abschnitt von einer längs des Rohres 4 verschiebbaren Hülse 9 gebildet wird. In dem Ventil-Rohrabschnitt des Rohres 4 einerseits und in der Hülse 9 andererseits sind jeweils mindestens eine Radialbohrung, nämlich jeweils eine Radialbohrung 10 in der Hülse 9 und 11 in dem Rohr 4 vorgesehen. Je nach Verschiebestellung der Hülse 9 gegenüber dem Rohr 4 bilden die beiden Radialbohrungen 10 und 11 eine Durchflussöffnung in den Abflusskanal 5 oder diese Öffnungen 10, 11 sind soweit gegeneinander verschoben, dass eine Verschlussfunktion des Ventiles 8 vorliegt, das heißt ein Zustand, in dem kein gereinigter Kraftstoff in den Abflusskanal 9 eintreten kann.

Die Hülse 9 lagert federbelastet auf dem Rohr 4. Die Federbelastung erfolgt durch eine Schraubenfeder 12, die sich an gegenüberliegenden Widerlagern des Rohres 4 einerseits und der Hülse 9 andererseits abstützt. Bei fehlendem Vorhandensein eines Ringfilterelementes 3 dehnt sich die Schraubenfeder 12 längenmäßig aus, wodurch das Ventil 8 Verschlussfunktion erhält. Bei vorhandenem Ringfilterelement 3 wird die Schraubenfeder 12 gespannt, indem von dem Ringfilterelement 3 über dessen Endscheibe 13 eine Spannkraft auf die Schraubenfeder 12 ausgeübt wird. Diese Kraftausübung erfolgt dadurch, dass die Endscheibe 13 über einen an deren radialem Innenumfang vorgesehenen Dichtring 14 direkt an dem hülsenseitigen Widerlager der Schraubenfeder 12 angreift.

Bei dem in geschlossenem Zustand gezeichneten Filtergehäuse ist das Ventil 8 geöffnet. Bei einem Öffnen des Filterdeckels 2 zum Zwecke eines Austausches des Ringfilterelementes 3 wird das hülsenseitige Widerlager der Schraubenfeder 12 kraftentlastet, wodurch die Schraubenfeder 12 die Hülse 9 in eine Ventil-Verschlussposition verschiebt. Wird ein ausgewechseltes Ringfilterelement 3 durch ein neues ersetzt, so öffnet sich das Ventil 8 in genau ungekehrter Weise beim Verschließen des Filtergehäuses.

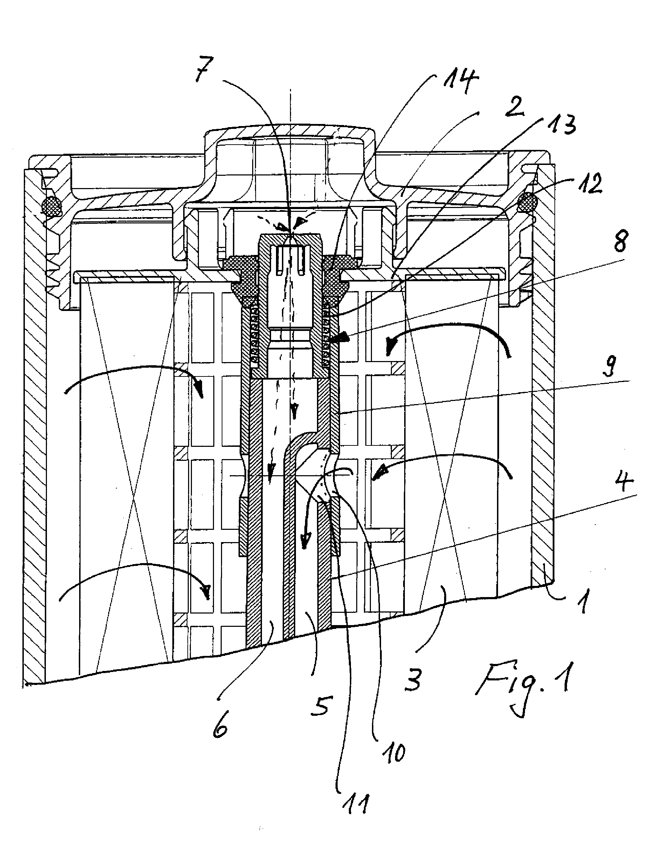

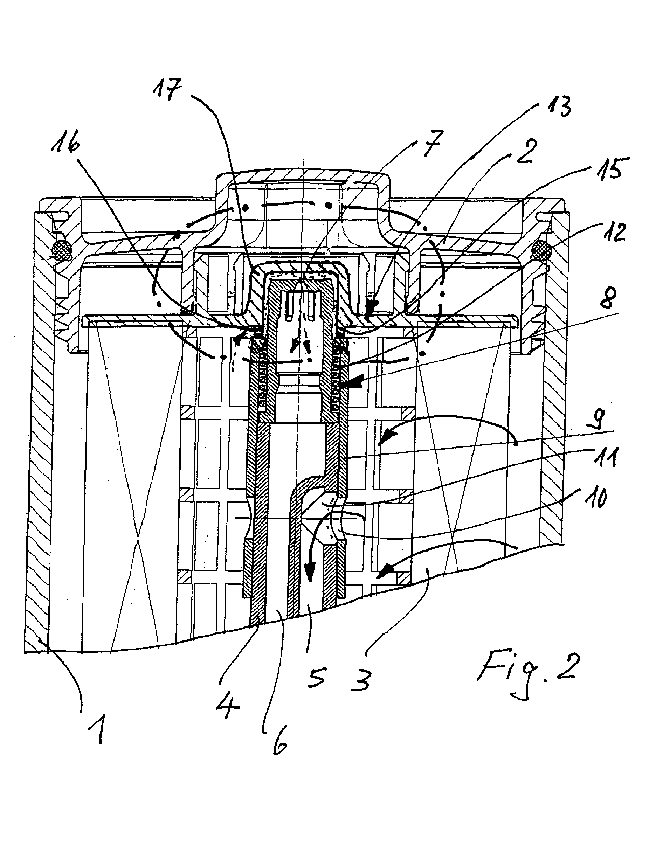

Fig. 2
Die Ausführung des Kraftstofffilters nach Fig. 2 unterscheidet sich von derjenigen nach Fig. 1 lediglich durch die Art der Entlüftung innerhalb des Filters. Während die Entlüftung bei der Ausführung nach Fig. 1 von der Filterrohseite aus erfolgt, geschieht dies bei der Ausführung nach Fig. 2 von der Reinseite aus. Konstruktiv unterscheidet sich das Kraftstofffilter nach Fig. 1 daher lediglich von derjenigen nach Fig. 1 in dem in der Fig. 2 mit einer strichpunktierten Linie umrandeten Bereich. Dabei besteht der wesentliche Unterschied darin, dass die Endscheibe 13 des Ringfilterelementes 3 bei der Ausführung nach Fig. 2 geschlossen ausgebildet ist, während diese Endscheibe 13 bei der Ausführung nach Fig. 1 die Form einer im Zentrum offenen Ringscheibe aufweist. Die sich bei den beiden unterschiedlichen Filterausführungen ergebenden unterschiedlichen Entlüftungsströme sind in den beiden Figuren jeweils mit Strömungspfeilen verdeutlicht.

Bei dem Ringfilterelement 3 dient der dessen Innenraum begrenzende Bereich der ersten Endscheibe 13 als Betätigungseinrichtung für das Ventil 8. Dabei ist ein Ringkragen 15 an der, der Reinseite des Ringfilterelementes 3 zugewandten Seite der Endscheibe 13 als Betätigungselement vorgesehen. Dieser Ringkragen 15 kontaktiert mit seiner Stirnseite den als Hülse 9 ausgebildeten verschiebbaren Rohrabschnitt des Ventiles 8. Innerhalb des Ringkragens 15 ist mindestens ein Durchgangskanal 16 vorgesehen, der axial offen in die Kontaktfläche münden kann. Dieser Durchgangskanal 16 ermöglicht bei einer im übrigen glatten, ebenen Stirnseite des äußeren Rohrabschnittes 9 und einem an dieser Stirnfläche kontaktierend anliegenden Ringkragen 15 einen Durchfluss an Entlüftungsluft. Die Öffnung dieses Durchgangkanales 16 kann als zusätzliche Drosselöffnung ausgebildet sein. Hierdurch lässt sich eine Zweifachdrosselung in einer ersten und in einer zweiten Drosselöffnung erreichen.

Die Drosselöffnung 7 in dem Entlüftungskanal 6 soll bei stehend angeordnetem Filter möglichst weit oben liegen, um eine optimale Entlüftung erreichen zu können. Vorteilhafterweise liegt die Drosselöffnung 7 entsprechend der Darstellung in Fig. 2 oberhalb der oberen Endscheibe des Ringfilterelementes 3. Um dies bei einer filterreinseitigen Entlüftung realisieren zu können, muss die dortige erste Endscheibe 13 in ihrem zentralen Bereich eine von dem Inneren des Ringfilterelementes 3 ausgehend nach außen gerichtete Auswölbung 17 besitzen.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Kraftstofffilter für einen Verbrennungsmotor eines Kraftfahrzeuges mit
- einem teilbaren, eine Kraftstoffzu- und eine Abflussöffnung aufweisenden Gehäuse,
- einem austauschbar innerhalb des Gehäuses gelagerten, radial von außen nach innen durchströmbaren Ringfilterelement (3) mit einseitigen Endscheiben, nämlich einer ersten (13) und zweiten Endscheibe,
- einer im Filterbetrieb stehenden Ausrichtung der Längsachse des Ringfilterelementes (3),
- einem, im radialen Innenraum des Ringfilterelementes (3) von unten aus der Kraftstoff-Abflussöffnung nach oben führenden, gereinigten Kraftstoff abführenden Abflusskanal (5) in einem Rohr (4),
- einem zentral angeordneten, nach unten außen führenden und oben verschlossenen Entlüftungskanal (6) mit einer Drosselöffnung (7) in dem oberen Verschluss, wobei diese Drosselöffnung (7) in den Rein- oder Rohraum des Filters mündet,
**gekennzeichnet durch** die Merkmale,
- der, gereinigten Kraftstoff abführende, Abflusskanal (5) kommuniziert ausschließlich über ein Ventil (8) mit dem stromauf dieses Ventiles (8) liegenden Reinraum,
- das Ventil (8) ist bei vorhandenem Ringfilterelement (3) geöffnet und geschlossen bei fehlendem Ringfilterelement (3),
- der Ventilzustand in Offen- oder Geschlossenposition ist ausschließlich **durch** das Vorhanden- oder Nichtvorhandensein des Ringfilterelementes (3) als Ventilbetätigungselement bestimmt.

2. Kraftstofffilter nach Anspruch 1,
**dadurch gekennzeichnet,**
**dass** das Ventil (8) gebildet ist aus zwei, konzentrisch ineinander verschiebbaren Rohrabschnitten mit je nach Verschiebestellung sich überdeckenden oder verschließenden, radialen Öffnungen (10, 11).

3. Kraftstofffilter nach Anspruch 1 oder 2,
**dadurch gekennzeichnet,**
**dass** das Ventil (8) mit einer, in Verschieberichtung der Rohrabschnitte wirkenden Ventilverschluss-Feder (12) versehen ist.

4. Kraftstofffilter nach einem der vorhergehenden Ansprüche mit einer reinseitigen Entlüftung,
**gekennzeichnet durch** die Merkmale:
- die erste Endscheibe (13) des Ringfilterelementes (3) ist dem oben liegenden Verschlussbereich des Entlüftungskanales (6) zugeordnet und bis auf die Drosselöffnung (7) geschlossen ausgebildet,
- der den Innenraum des Ringfilterelementes (3) begrenzende Bereich der ersten Endscheibe (13) dient als Betätigungseinrichtung für das Ventil (8).

5. Kraftstofffilter nach Anspruch 4,
**dadurch gekennzeichnet,**
**dass** die erste Endscheibe (13) das Ventil (8) über dessen verschiebbaren Rohrabschnitt (9) betätigt.

6. Kraftstofffilter nach Anspruch 5,
**dadurch gekennzeichnet,**
**dass** der verschiebbare Rohrabschnitt (9) den unbeweglichen Rohrabschnitt des Ventiles (8) umschließt.

7. Kraftstofffilter nach Anspruch 6,
**dadurch gekennzeichnet,**
**dass** die Drosselöffnung (7) in dem Stirnbereich des unbeweglichen Rohrabschnittes vorgesehen ist.

8. Kraftstofffilter nach Anspruch 7,
**dadurch gekennzeichnet,**
**dass** die erste Endscheibe (13) den verschiebbaren Rohrabschnitt (9) direkt kontaktiert.

9. Kraftstofffilter nach Anspruch 8,
**dadurch gekennzeichnet,**
**dass** für den, von dem Filterreinraum in die Drosselöffnung (7) des Entlüftungskanales (6) führenden Entlüftungsstrom ausschließlich ein Durchgangskanal (16) zwischen der ersten Endscheibe (13) und dem verschiebbaren Rohrabschnitt (9) vorgesehen ist, wobei dieser Durchgangskanal (16) ausschließlich durch Ausnehmungen in der ersten Endscheibe (13) ausgebildet ist.

10. Kraftstofffilter nach einem der Ansprüche 4 bis 9,
**dadurch gekennzeichnet,**
**dass** der Durchgangskanal (16) als eine vorgeschaltete Zusatzdrossel ausgebildet ist.

11. Kraftstofffilter nach einem der Ansprüche 4 bis 10,
**dadurch gekennzeichnet,**
**dass** die erste Endscheibe (13) in einem zentral innen liegenden Bereich eine axial nach außen verlaufende Auswölbung (17) zur Aufnahme des geschlossenen, lediglich mit der Drosselöffnung (7) versehenen Endes des Entlüftungskanales (6) aufweist.
